# EUROPEAN PATENT APPLICATION

(11) **EP 2 842 408 A1**
(43) Date of publication of application: **04.03.2015**
(21) Application number: 12875381.1
(22) Date of filing: 17.05.2012
(51) Int. Cl.: A01D 51/00, A01D 75/00

(54) **SUCTION DEVICE FOR CROPS THAT HAVE FALLEN ON THE GROUND**

(30) Priority: 25.04.2012 ES 201230617
(71) Applicant: Asin Borao, Francisco Javier, 50018 Zaragoza (ES)
(72) Inventor: Asin Borao, Francisco Javier, 50018 Zaragoza (ES)
(74) Representative: Carvajal y Urquijo, Isabel
(86) International application number: PCT/ES2012/070348
(87) International publication number: WO 2013/160496

(57) **Abstract**

A fallen crop vacuum that has: a vacuuming unit (15) to vacuum up a crop that has fallen to a ground and obtain a vacuumed crop, vacuuming up the fallen crop in a set vacuum volume (100) between the ground and the vacuum; a vacuum intake (11) to take in a fallen crop that is to be vacuumed up; a vacuum outlet (12) to let out a crop that has been vacuumed up; a vacuum pipe (1112) to guide the crop from the vacuum intake (11) to the vacuum outlet (12).

## Description

### Field of the invention

The invention falls within the field of agricultural machinery equipment.

### Background of the invention

Today's harvesters are essentially made up of two elements, which are the combine and the header. The former contains the engine, which provides the necessary power and drive in order for everything to operate. The header is a detachable element that is incorporated onto the combine and depends upon the latter completely in order to operate. It is detached first and foremost so that it can be transported, as it is so wide that it would be impossible for the combine to drive on the roadway with it on.

### Description of the invention

The invention relates to a fallen crop vacuum like that which is defined in the set of claims.

The invention makes it possible to recover as much of the grain that has fallen to the ground as possible. On the harvester, a powerful and adjustable vacuum system is placed upon the header in order to pick up the ears and grain that has fallen to the ground, by using implements that hang from the header. Once they have been picked up, the ears are sorted into the header so that they enter the same threshing process as the rest of the cut grain using the conventional mechanisms.

The vacuum system is sized to the width of each header. Depending on the power needed, the engines may be electrically, hydraulically or mechanically supplied.

The brushes, which may be flush with the ground, can be built with a metal strip for greater durability. The pieces of rubber that may close off this space can be designed to cause the ears to move so that it is easier to vacuum them up.

The ducts that join the brushes to the vacuum can be made of plastic materials in order to minimize the weight added on to the machine, and for the necessary ease of assembly, maintenance and lower cost.

As for the vacuum system, it should provide for the special temperature and dirtiness conditions in which it works, such that it is durable and reliable.

The ramp feeding the ears into the header can be metal, and if necessary may operate with a scoop wheel that pushes the material, or with a vibration system that causes the material to fall.

The entire system may be controlled by an operator from the cab through start-up and power variation actuators. Likewise, they will be able to visually monitor the system from their position.

With the system of the invention, in addition to collecting the standing ears in a cultivated field with the normal mechanisms of a harvester, it is made possible to collect the production that falls to the ground, and which until now has been lost to farmers. This improved performance by gathering everything that has been grown will substantially improve farms' profitability.

### Brief description of the drawings

What follows is a very brief description of a series of drawings that aid in better understanding the invention, and which are expressly related to an embodiment of said invention that is presented by way of a non-limiting example of the same.

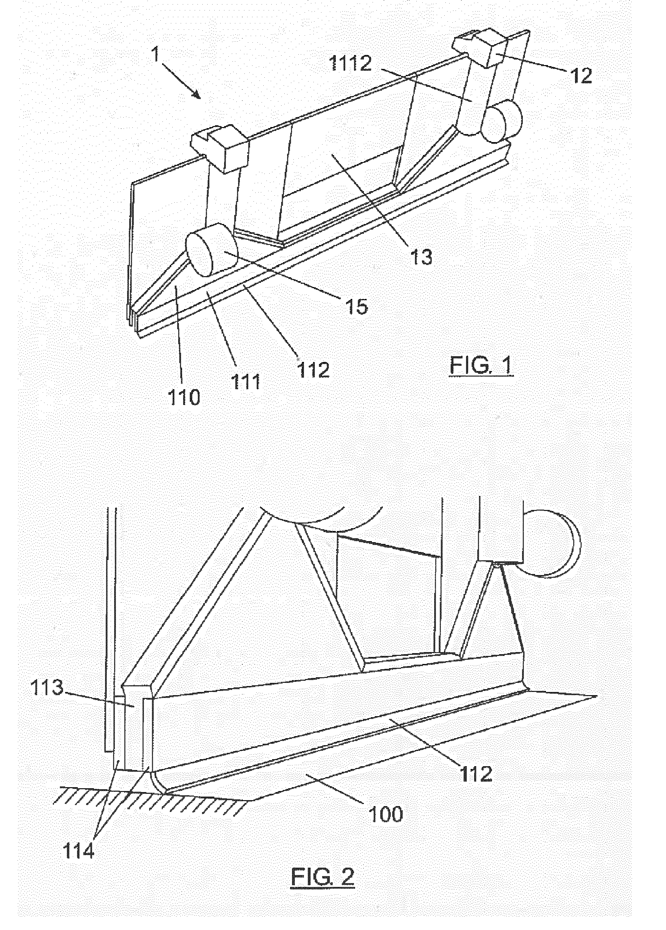

Figure 1 is a perspective view of the vacuum of the invention.
Figure 2 is a detailed view of the lower portion of the vacuum of the invention.

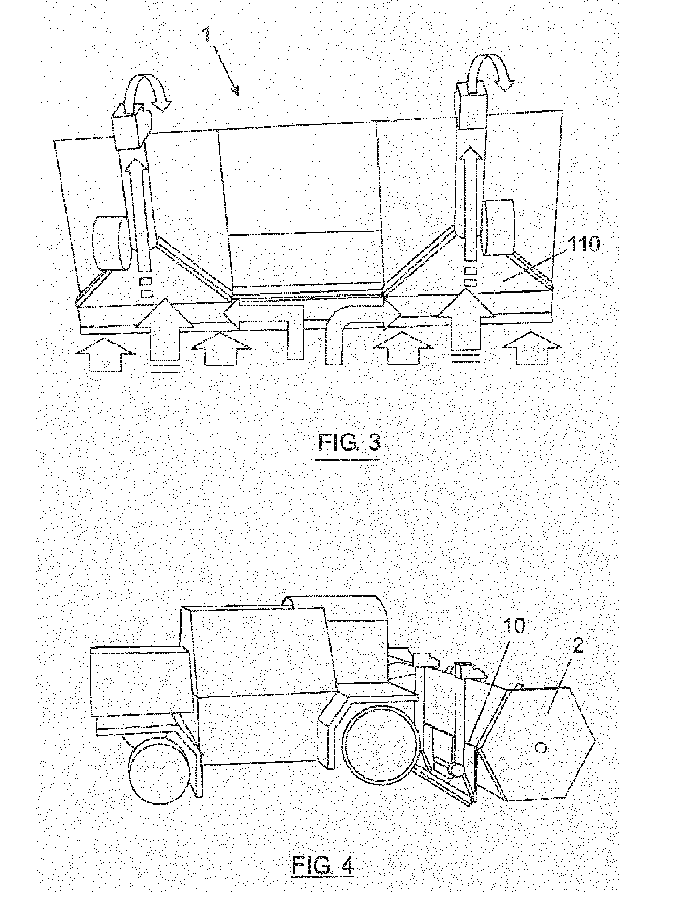

Figure 3 is a view of the vacuum of the invention with arrows indicating the vacuum air current.
Figure 4 is a perspective view of a harvester with the vacuum of the invention.

### Detailed description of an embodiment

1. One embodiment of the invention relates to a fallen crop vacuum that comprises:
   vacuuming means (15) designed to vacuum up a crop that has fallen to the ground and obtain a vacuumed crop, vacuuming up the fallen crop in a set vacuum volume (100) between the ground and the vacuum;
   a vacuum intake (11) designed to take in a fallen crop that is to be vacuumed up;
   a vacuum outlet (12) designed to let out a crop that has been vacuumed up;
   a vacuum pipe (1112) designed to guide the crop from the vacuum intake (11) to the vacuum outlet (12).

The crop that has fallen to the ground may comprise cereal grain and ears, as well as any oleaginous plant grain and pod, and maize ears and kernels.

In accordance with other characteristics of the invention:
2. The fallen crop vacuum comprises:
   a vacuum collector (110) upstream from the vacuum intake (11) designed to guide the fallen crop to be vacuumed up to the vacuum intake (11). The vacuum collector (110) may have the form of a duct that converges from the vacuum volume (100) up to the vacuum intake (11).
3. The fallen crop vacuum comprises:
   a rubber apron (112) designed to close off the rear face of the vacuum volume (100) and thus increase the vacuuming efficiency. By closing off the rear face of the vacuum volume, the suction on the crop to be vacuumed up is stronger, as it decreases the perimeter area of the vacuum volume. The rubber apron (112) could also be extended along the side faces of the vacuum volume.
4. The fallen crop vacuum comprises:
   an intake mouth (111) upstream from the vacuum intake (11) designed to define an intake face of the vacuum volume (100).
5. The intake mouth (111) comprises two strips (114) separated from one another by a vacuum distance.
6. The intake mouth (111) comprises resilient means (113) designed so that the intake mouth (111) can follow the irregularities of the terrain. The resilient means (113) can be compression springs that push on the strips (114) of the lower area of the vacuum so that the strips (114) can absorb the irregularities of the terrain.
7. The fallen crop vacuum comprises:
   coupling means (10) designed to couple the vacuum (1) to a harvester platform (2).
8. The coupling means (10) are designed to couple the vacuum (1) between the platform (2) and the harvester.
9. The fallen crop vacuum comprises:
   guiding means (120) designed to guide the vacuumed crop from the vacuum outlet (12) to a tap on the harvester, by shaking.

## Claims

1. A vacuum for crop that has fallen to the ground **characterized in that** it comprises:
vacuuming means (15) designed to vacuum up a crop that has fallen to a ground and obtain a vacuumed crop, vacuuming up the fallen crop in a set vacuum volume (100) between the ground and the vacuum;
a vacuum intake (11) designed to take in a fallen crop that is to be vacuumed up;
a vacuum outlet (12) designed to let out a crop that has been vacuumed up;
a vacuum pipe (1112) designed to guide the crop from the vacuum intake (11) to the vacuum outlet (12).

2. The fallen crop vacuum according to claim 1 **characterized in that** it comprises:
a vacuum collector (110) upstream from the vacuum intake (11) designed to guide the fallen crop to be vacuumed up to the vacuum intake (11).

3. The fallen crop vacuum according to any of the claims 1-2 **characterized in that** it comprises a rubber apron (112) designed to close off a rear face of the vacuum volume (100) and thus increase the vacuuming efficiency.

4. The fallen crop vacuum according to any of the claims 1-3 **characterized in that** it comprises an intake mouth (111) upstream from the vacuum intake (11) designed to define an intake face of the vacuum volume (100).

5. The fallen crop vacuum according to claim 4 **characterized in that** the intake mouth (111) comprises two strips (114) separated from one another by a vacuum distance.

6. The fallen crop vacuum according to claim 5 **characterized in that** the intake mouth (111) comprises resilient means (113) designed so that the intake mouth (111) can follow the irregularities of the terrain.

7. The fallen crop vacuum according any of the claims 1-6 **characterized in that** it comprises:
coupling means (10) designed to couple the vacuum (1) to a harvester platform (2).

8. The fallen crop vacuum according to claim 7 **characterized in that** the coupling means (10) are designed to couple the vacuum (1) between the platform (2) and the harvester.

9. The fallen crop vacuum according any of the claims 7-8 **characterized in that** it comprises
guiding means (120) designed to guide the vacuumed crop from the vacuum outlet (12) to a tap on the harvester, by shaking.
